# EUROPEAN PATENT SPECIFICATION

(11) **EP 3 571 842 B1**
(45) Date of publication and mention of the grant of the patent: **31.05.2023**
(21) Application number: 17713015.0
(22) Date of filing: 23.03.2017
(51) Int. Cl.: H04N 19/17, H04N 19/174, H04N 19/176, H04N 19/503, H04N 19/593

(54) **DEVICES AND METHODS FOR VIDEO CODING**
VERFAHREN UND VORRICHTUNGEN ZUR VIDEOKODIERUNG
DISPOSITIFS ET PROCÉDÉS DE CODAGE VIDÉO

(43) Date of publication of application: 27.11.2019
(73) Proprietor: Huawei Technologies Co., Ltd., Longgang District Shenzhen, Guangdong 518129 (CN)
(72) Inventor: ESENLIK, Semih, 80992 Munich (DE); KOTRA, Anand, Meher, 80992 Munich (DE); ZHAO, Zhijie, 80992 Munich (DE)
(74) Representative: Körber, Martin Hans
(86) International application number: PCT/EP2017/057025
(87) International publication number: WO 2018/171890

(56) References cited:
- WO-A1-2008/024345
- WO-A1-2015/131323
- US-A1- 2007 036 226

## Description

### TECHNICAL FIELD

The present invention relates to the field of video coding. More specifically, the invention relates to an encoding apparatus and a decoding apparatus for coding video data as well as corresponding methods.

### BACKGROUND

Digital video communication and storage applications are implemented by a wide range of digital devices, e.g. , digital cameras, cellular radio telephones, laptops, broadcasting systems, video teleconferencing systems, etc. One of the most important and challenging tasks of these applications is video coding. The task of video coding is complex and is constrained by two contradicting parameters: coding efficiency and computational complexity. Video coding standards, such as ITU-T H.264/AVC or ITU-T H.265/HEVC, provide a good tradeoff between these parameters. For that reason support of video coding standards is a mandatory requirement for almost any video coding application.

The state of the art video coding standards are based on partitioning of a frame into video coding blocks (or short blocks). Processing of these blocks depend on their size, spatial position and a coding mode specified by an encoder. Coding modes can be classified into two groups according to the type of prediction: intra- and inter-prediction modes. Intra-prediction modes use pixels of the same frame (also referred to as picture or image) to generate reference samples to calculate the prediction values for the pixels of the block being reconstructed. Inter-prediction modes are designed for temporal prediction and use reference samples, for instance, of a previous frame to predict pixels of the block of the current frame. After a prediction stage, transform coding is performed for coding a prediction residual (also referred to as prediction error) that is the difference between an original block and the corresponding predicted block. Then, the transform coefficients and side information are encoded using an entropy coder (e.g., CABAC for AVC/H.264 and HEVC/H.265).

Similarly to the ITU-T H.264/AVC video coding standard, the HEVC/H.265 video coding standard provides for a division of the input frame into blocks, e.g., coding units (CUs). Each of the CUs can be further split into either smaller CUs or prediction units (PUs). A PU can be intra- or inter-predicted according to the type of processing applied for the pixels of the PU. In case of inter-prediction, a PU represents an area of pixels that is processed by motion compensation using a motion vector specified for a PU. For intra prediction, the adjacent pixels of neighbor blocks are used as reference samples to predict a current block. A PU specifies a prediction mode that is selected from the set of intra-prediction modes for all the transform units (TUs) contained in this PU. A TU can have different sizes (e.g., 4x4, 8x8, 16x16 and 32x32 pixels) and can be processed in different ways. For a TU, transform coding is performed, i.e. the prediction residuals are transformed with a discrete cosine transform or a discrete sine transform (in the HEVC/H.265 standard, it is applied to intra-coded blocks) and quantized. The quantization of the prediction residuals can produce artifacts such as blockiness between units, ringing artifacts along the sharp edges, etc. These artifacts may be suppressed using loop filters such as DBF, SAO, and ALF.

According to current block based video coding standards the video coding blocks of a frame are generally coded using a predefined block coding order. Usually, the video coding blocks are processed using z-scan and raster scan coding orders. Thus, in general due to the z-scan and raster scan coding orders, the processing order of blocks follows a pattern within a frame, namely from left to right and from top to bottom of a frame.

As already mentioned above, current video coding standards provide a plurality of different modes for intra predicting the pixels of a currently processed video coding block on the basis of already predicted pixels of neighboring video coding blocks (also referred to as reference samples). Due to the generally predefined block processing order some intra prediction modes, in particular angular prediction modes, can be subject to a coding performance degradation, because the reference pixels are very distant from the pixels to be predicted. In some cases the reference samples might even not be available due to the block processing order.

Flipping a region of an image means transforming the image content of the region by reflecting (i.e. mirroring) the image content about a symmetry axis of the image region. A non-square rectangular image region has two symmetry axes; these are perpendicular to each other and may be referred to as the vertical symmetry axis and the horizontal symmetry axis, respectively. A square region has got four symmetry axes: a horizontal one, a vertical one, and the two diagonals of the square region. In other words, flipping a region will mirror the image content of the region by a selected one of the symmetry axes of the image region; that symmetry axis is referred to herein as the flip axis. Because the shape of the region is invariant under reflections about the flip axis, the flipping operation will affect only the image content (which generally is not symmetric) but not the shape of the region.

The article "Adaptive Picture Flipping Coding For Enhancing H.264/AVC", Murakami et al, Picture Coding Symposium PCS 2007 discloses a video coding scheme comprising the steps of flipping a complete video frame horizontally and/or vertically and selecting the best case on the basis of a rate distortion criterion for encoding the video frame using intra prediction. Although the disclosed video coding scheme somewhat mitigates the coding performance degradation for certain intra prediction modes due to the predefined block processing order, this video coding scheme may still encounter some problems. For instance, a video frame may often contain various portions with different dominating edge directions. Flipping the whole frame may improve the intra prediction in certain portions of the frame, but may deteriorate it in other portions of the frame. Therefore, flipping the whole frame improves the intra prediction performance only in certain situations, such as when the whole frame happens to have a uniformly distributed dominant edge direction.

Thus, there is a need for improved devices and methods for video coding.

WO 2008/024345 A1 provides methods and apparatus for video encoding and decoding using region-based flipping. An encoding apparatus includes a video encoder for encoding image regions of a picture into a resultant bitstream, wherein at least one of the image regions is flipped before encoding. A decoding apparatus includes a video decoder for decoding image regions from a bitstream, wherein at least one of the image regions is flipped after decoding.

WO 2015/131323 A1 discloses measures of encoding or decoding of blocks using intra block copy prediction to improve coding efficiency for intra-BC-predicted blocks. Some measures relate to block flipping in which an intra-BC-predicted block is flipped relative to a reference region, which can be indicated by a block vector value. Other measures relate to signaling of a skip mode in which a current intra-BC-predicted block uses a signaled BV differential but lacks residual data.

### SUMMARY

It is an object of the invention to provide improved devices and methods for video coding.

The foregoing and other objects are achieved by the subject matter of the independent claims. Further implementation forms are apparent from the dependent claims, the description and the figures.

The present invention is defined by an apparatus for decoding encoded video data according to independent claim 1 and a method for decoding encoded video data according to independent claim 9.

Additional features of the invention are provided in the dependent claims. In the following, parts of the description and drawings referring to embodiments which are not covered by the claims are not presented as embodiments of the invention, but as examples useful for understanding the invention.

The following disclosure employs a plurality of terms which, in embodiments, have the following meaning: Pixel value (or sample value) - an intensity (i.e. brightness) level of a pixel, or an intensity level of a colour component of a pixel, e.g., an intensity level of a red, green, or blue component of the pixel. Slice - a spatially distinct region of a picture that is independently encoded/decoded. Slice header - Data structure configured to signal information associated with a particular slice. Video coding block (or short block) - an MxN (M-column by N-row) array of pixels or samples (each pixel/sample being associated with one or more pixel values (sample values), or an MxN array of transform coefficients. Coding Tree Unit (CTU) grid - a grid structure employed to partition blocks of pixels into macroblocks for video encoding. Coding Unit (CU) - a coding block of luma samples, two corresponding coding blocks of chroma samples of an image that has three sample arrays, or a coding block of samples of a monochrome picture or a picture that is coded using three separate color planes and syntax used to code the samples. Prediction Unit (PU) - a prediction block of luma samples, two corresponding prediction blocks of chroma samples of a picture that has three sample arrays, or a prediction block of samples of a monochrome picture or a picture that is coded using three separate color planes and syntax used to predict the prediction block samples. Transform Unit (TU) - a transform block of luma samples, two corresponding transform blocks of chroma samples of a picture that has three sample arrays, or a transform block of samples of a monochrome picture or a picture that is coded using three separate color planes and syntax used to predict the transform block samples. Luma - information indicating the brightness of an image sample. Chroma - information indicating the color of an image sample, which may be described in terms of red difference chroma component (Cr) and blue difference chroma component (Cb).

As used herein, a video signal or video sequence is a set of one or more subsequent frames. The one or more frames represent either a still image (in this case there is just a single frame, and the expression "one or more frames" may then be replaced by "one frame" or "frame") or a motion picture (in this case there a several successive frames). A frame may also be referred to as a picture or an image.

According to a first aspect the invention relates to an apparatus for decoding encoded video data (decoding apparatus), wherein the video data comprises one or more frames, each frame is partitioned into a plurality of regions, and each region comprises one or more video coding blocks. The video coding blocks could be macro blocks, coding tree units, coding units, prediction units and/or prediction blocks. Each video coding block comprises a plurality of pixels.

The decoding apparatus comprises: a decoding unit configured to decode the encoded video data for providing a residual video coding block associated with a current video coding block of a current frame of the one or more frames; a prediction unit configured to generate for the current, i.e. currently processed video coding block a predicted video coding block; a restoration unit configured to restore the current video coding block on the basis of the residual video coding block and the predicted video coding block; and a flip unit configured to flip, once all blocks of the current frame have been restored by the restoration unit, each region of a selected subset of the plurality of regions of the current frame about a flip axis of the respective region, the flip axis being a symmetry axis of that region.

Thus, an improved decoding apparatus is provided, which can decode video data that has been encoded with flipped regions for intra-prediction.

As will be appreciated, the restored current frame provided by the restoration unit can comprise flipped regions, i.e. regions in a flipped state, as well as non-flipped regions, i.e. regions in an original, non-flipped state. Thus, the selected subset of the plurality of regions of the current frame, i.e. the set of regions to be flipped from the flipped state back to the original non-flipped state, will in many cases be a proper subset of all the regions of the current frame. Different regions of the frame can have different sizes and/or shapes. In one embodiment, they can be flipped relative to differently orientated axes. For instance, a first region can be flipped relative to a horizontal axis and a second region can be flipped relative to a vertical axis. In another embodiment, the flip axes of the regions of the subset all have the same orientation (e.g., they are all vertical or they are all horizontal), allowing for reduced signaling.

In a further implementation form of the first aspect, the prediction unit is configured to perform an intra prediction and/or an inter prediction for generating the predicted video coding block on the basis of the current video coding block.

In a further implementation form of the first aspect, the prediction unit is configured perform an intra prediction and/or an inter prediction for generating the predicted video coding block on the basis of the current video coding block and one or more neighboring video coding blocks which have the same flip state and the same flip axis as the current video coding block. Note that the image content may exhibit a discontinuity on the border between two blocks if only one of the blocks has been flipped, or if the two blocks do not have the same flip axis (e.g., when the two blocks a horizontally adjacent and their flip axes are their respective vertical symmetry axes, then the image content will be "torn" at the (vertical) border between these two blocks). In one embodiment, intra-prediction from a first block to a second block of the current frame is disabled if these two blocks (i.e. the first block and the second block) do not have the same flip state (i.e., if only one of the blocks is flipped) or if they do not have the same flip axis.

In a further implementation form of the first aspect, the plurality of regions have a rectangular, in particular quadratic shape, and the flip unit is configured to flip each region of the selected subset of the plurality of regions of the current frame of the one or more frames about the horizontal symmetry axis and/or about the vertical symmetry axis of the respective region for generating the modified current frame.

In a further implementation form of the first aspect, the flip unit is configured to determine the subset of the plurality of regions based on the encoded video data prior to flipping the regions of the subset. In a particular implementation form, the flip unit extracts one of the following from the encoded video data:
- a flip state of a first region of the plurality of regions of the current frame;
- an identifier for identifying a flipped region of the plurality of regions of the current frame; and
- an identifier for identifying a non-flipped region of the plurality of regions of the current frame;
and the flip unit analyses image content of the plurality of regions. The analysis may comprise evaluating continuity of the image content at the borders between adjoining regions of the plurality of regions. If the image content is found to be continuous at the border between two adjoining regions, the flip unit may assume that the two adjoining regions have the same flip state. In other words, the flip unit can extract the flip state of a first region of the plurality of regions of the current frame from the encoded video data (e.g., from a dedicated bit in the encoded video data) and infer the flip state of a second region, which adjoins the first region, by evaluating whether the image content of the second region connects smoothly to the image content of the first region. The flip unit can further determine the flip state of a third region adjoining the second region based on the flip state of the second region, and so on. In an embodiment in which several flip directions (e.g., horizontal and vertical) are allowed, the flip unit may be configured to infer both the flip state (flipped or non-flipped) and the flip axis (e.g., horizontal or vertical) for the respective region.

In a further implementation form of the first aspect, the apparatus further comprises an In-loop filtering unit for filtering the current frame of the one or more frames provided by the flip unit.

In a further implementation form of the first aspect, the apparatus is configured to process the plurality of video coding blocks in accordance with a processing order and wherein the apparatus is configured to adapt the processing order such that all video coding blocks of a region of the frame are decoded before proceeding to a further region of the frame.

In a further implementation form of the first aspect, the decoding unit is configured to decode the encoded video data in the form of a bitstream, in particular a CABAC portion of the bitstream, wherein the decoding unit is further configured to continue decoding the bitstream, in particular the CABAC portion of the bitstream, between regions of the current frame having different flip states.

In a further implementation form of the first aspect, the decoding unit comprises a CABAC entropy decoding unit based on a context model and wherein the CABAC entropy decoding unit is configured to continue using the same context model for regions of the current frame having different flip states.

According to a second aspect the invention relates to a corresponding method for decoding encoded video data, the video data comprising one or more frames, each frame being partitioned into a plurality of regions, each region comprising one or more video coding blocks. The decoding method comprises the following steps: decoding the encoded video data for providing a residual video coding block associated with a current video coding block of a current frame; generating for the current, i.e. currently processed video coding block a predicted video coding block; restoring the current video coding block on the basis of the residual video coding block and the predicted video coding block; and flipping each region of a selected subset of the plurality of regions of the current frame about a flip axis of the respective region, the flip axis being a symmetry axis of that region.

The decoding method according to the second aspect of the invention can be performed by the decoding apparatus according to the first aspect of the invention. Further features of the decoding method according to the second aspect of the invention result directly from the functionality of the decoding apparatus according to the first aspect of the invention and its different implementation forms.

According to a third aspect the invention relates to an apparatus for encoding video data (encoding apparatus), the video data comprising one or more frames, each frame being partitionable into a plurality of regions, each region comprising one or more video coding blocks. The video coding blocks may be macro blocks, coding tree units, coding units, prediction units and/or prediction blocks. Each video coding block comprises a plurality of pixels.

The encoding apparatus comprises: a flip unit configured to flip each region of a selected subset of the plurality of regions of a current frame of the one or more frames about a flip axis of the respective region to generate a modified current frame; a prediction unit configured to generate for a current, i.e. currently processed video coding block a predicted video coding block on the basis of the modified current frame; and an encoding unit configured to encode the current video coding block on the basis of the predicted video coding block. The modified current frame may comprise non-flipped regions as well as flipped regions.

Thus, an improved encoding apparatus is provided, which can achieve a finer region adaptation compared to prior art devices.

As will be appreciated, the modified current frame provided by the flip unit comprises flipped regions, i.e. regions in a flipped state, and non-flipped regions, i.e. regions in an original non-flipped state. Thus, the selected subset of the plurality of regions of the current frame, i.e. the set of regions being in the flipped state, is a real subset of all of the regions of the current frame. Different regions of the frame can have different sizes and/or shapes and can be flipped relative to differently orientated axes. For instance, a first region can be flipped relative to a horizontal axis and a second region can be flipped relative to a vertical axis.

In a further implementation form of the third aspect, the flip unit is configured to select the subset of the plurality of regions of the current frame to be flipped on the basis of a rate distortion criterion, such as an average PSNR.

In a further implementation form of the third aspect, the prediction unit is configured to perform an intra prediction and/or an inter prediction for generating the predicted video coding block on the basis of the current video coding block.

In a further implementation form of the third aspect, the prediction unit is configured perform an intra prediction and/or an inter prediction for generating the predicted video coding block on the basis of the current video coding block and one or more neighboring video coding blocks which have the same flip state and the same flip axis as the current video coding block.

In a further implementation form of the third aspect, the plurality of regions have a rectangular, in particular quadratic shape, wherein the flip unit is configured to flip each region of the selected subset of the plurality of regions of the current frame of the one or more frames about the horizontal and/or vertical axis of the respective region for generating the modified current frame.

In a further implementation form of the third aspect, the encoding unit is further configured to encode one of the following in the encoded video data:
- a flip state of a first region of the plurality of regions of the current frame;
- an identifier for identifying a flipped region of the plurality of regions of the current frame;
- an identifier for identifying a non-flipped region of the plurality of regions of the current frame.

In a further implementation form of the third aspect, the encoding unit is configured to encode the current video coding block on the basis of the predicted video coding block as a part of a bitstream, in particular a CABAC portion of the bitstream, and wherein the encoding unit is configured to continue the bitstream, in particular the CABAC portion of the bitstream, between regions of the current frame having different flip states.

In a further implementation form of the third aspect, the encoding unit comprises a CABAC entropy coding unit based on a context model, wherein the CABAC entropy coding unit is configured to continue using the same context model for regions of the current frame having different flip states.

In a further implementation form of the third aspect, the apparatus is configured to process the plurality of video coding blocks in accordance with a processing order, wherein the apparatus is further configured to adapt the processing order such that all video coding blocks of a region of the current frame are decoded before proceeding to a further region of the current frame.

In a further implementation form of the third aspect, the current frame is an I frame.

According to a fourth aspect the invention relates to a corresponding method for encoding video data, the video data comprising one or more frames, each frame being partitionable into a plurality of regions, each region comprising one or more video coding blocks. The encoding method comprises the following steps: flipping each region of a selected subset of the plurality of regions of a current frame of the one or more frames about a flip axis of the respective region, the flip axis being a symmetry axis of that region, for generating a modified current frame; generating for a current (i.e. currently processed) video coding block a predicted video coding block on the basis of the modified current frame; and encoding the current video coding block on the basis of the predicted video coding block.

The encoding method according to the fourth aspect of the invention can be performed by the encoding apparatus according to the third aspect of the invention. Further features of the encoding method according to the fourth aspect of the invention result directly from the functionality of the encoding apparatus according to the third aspect of the invention and its different implementation forms.

According to a fifth aspect the invention relates to a computer program comprising program code for performing the method according to the fourth aspect when executed on a computer.

The invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating an encoding apparatus according to an embodiment and a decoding apparatus according to an embodiment;
Fig. 2 shows a schematic diagram illustrating an original video data frame and a modified video data frame comprising two flipped regions as processed by an encoding apparatus according to an embodiment and a decoding apparatus according to an embodiment;
Fig. 3 shows a schematic diagram illustrating advantageous effects of an encoding apparatus according to an embodiment and a decoding apparatus according to an embodiment in the context of intra prediction;
Fig. 4 shows four exemplary regions or blocks of a video data frame as processed by an encoding apparatus according to an embodiment and a decoding apparatus according to an embodiment;
Fig. 5 shows a schematic diagram illustrating a hybrid encoding apparatus according to an embodiment;
Fig. 6 shows a schematic diagram illustrating two different block processing orders implemented in an encoding apparatus according to an embodiment and a decoding apparatus according to an embodiment;
Fig. 7 shows a schematic diagram illustrating a decoding method according to an embodiment; and
Fig. 8 shows a schematic diagram illustrating an encoding method according to an embodiment.

In the various figures, identical reference signs will be used for identical or at least functionally equivalent features.

### DETAILED DESCRIPTION OF THE EMBODIMENTS

In the following description, reference is made to the accompanying drawings, which form part of the disclosure, and in which are shown, by way of illustration, specific aspects in which the invention may be placed. It is understood that other aspects may be utilized and structural or logical changes may be made without departing from the scope of the invention. The following detailed description, therefore, is not to be taken in a limiting sense, as the scope of the invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

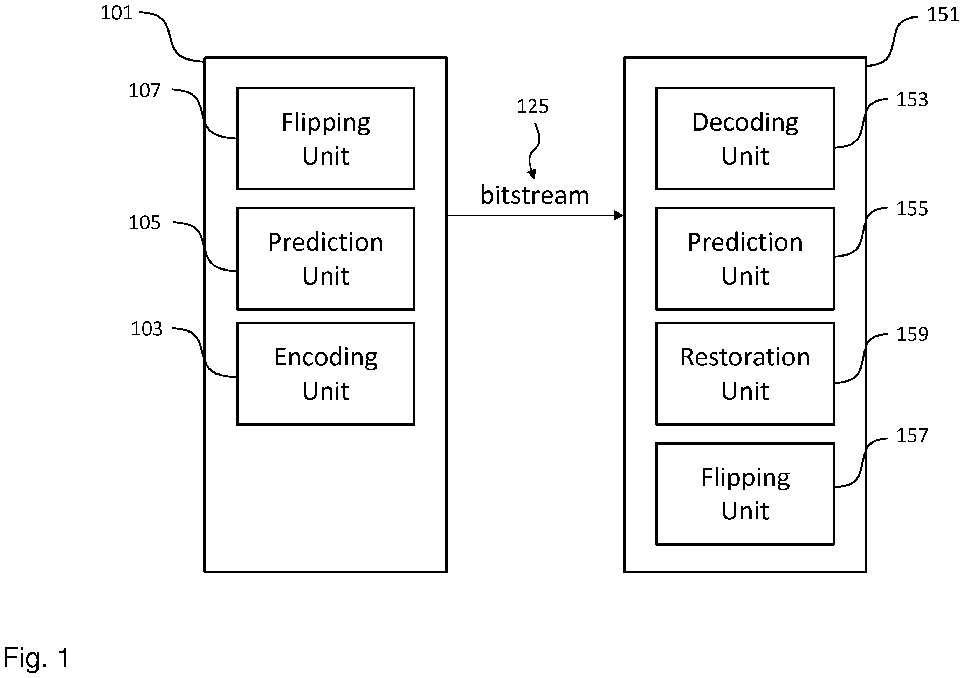

Figure 1 shows a schematic diagram illustrating an encoding apparatus 101 for encoding video data according to an embodiment and a decoding apparatus 151 for decoding video data according to an embodiment.

The encoding apparatus 101 is configured to encode video data, for instance in the form of a bitstream 125. The video data comprises one or more frames, wherein each frame can be partitioned into a plurality of regions and wherein each region has a symmetry axis and comprises one or more video coding blocks. The video coding blocks could be macro blocks, coding tree units, coding units, prediction units and/or prediction blocks. Each video coding block can comprise a plurality of pixels.

The encoding apparatus 101 comprises: a flip unit 107 configured to flip each region of a selected subset of the plurality of regions of a current frame of the one or more frames about the flip axis of the respective region for generating a modified current frame comprising non-flipped regions, i.e. regions in an original non-flipped state, and flipped regions, i.e. regions in a flipped state; a prediction unit 105 configured to generate for a current, i.e. currently processed video coding block a predicted video coding block on the basis of the modified current frame; and an encoding unit 103 configured to encode the current video coding block on the basis of the predicted video coding block.

As will be appreciated, the modified current frame provided by the flip unit 107 comprises flipped regions, i.e. regions in a flipped state, and non-flipped regions, i.e. regions in an original non-flipped state. Thus, the selected subset of the plurality of regions of the current frame, i.e. the set of regions in the flipped state, is a real subset of all of the regions of the current frame. Different regions of the frame can have different sizes and/or shapes and can be flipped relative to differently orientated axes. For instance, a first region can be flipped relative to a horizontal symmetry axis of the first region while a second region can be flipped relative to a vertical symmetry axis of the second region.

In an embodiment, the flip unit 107 is configured to select the subset of the plurality of regions of the current frame to be flipped on the basis of a rate distortion criterion.

In an embodiment, the prediction unit 105 is configured to perform an intra prediction and/or an inter prediction for generating the predicted video coding block on the basis of the current video coding block.

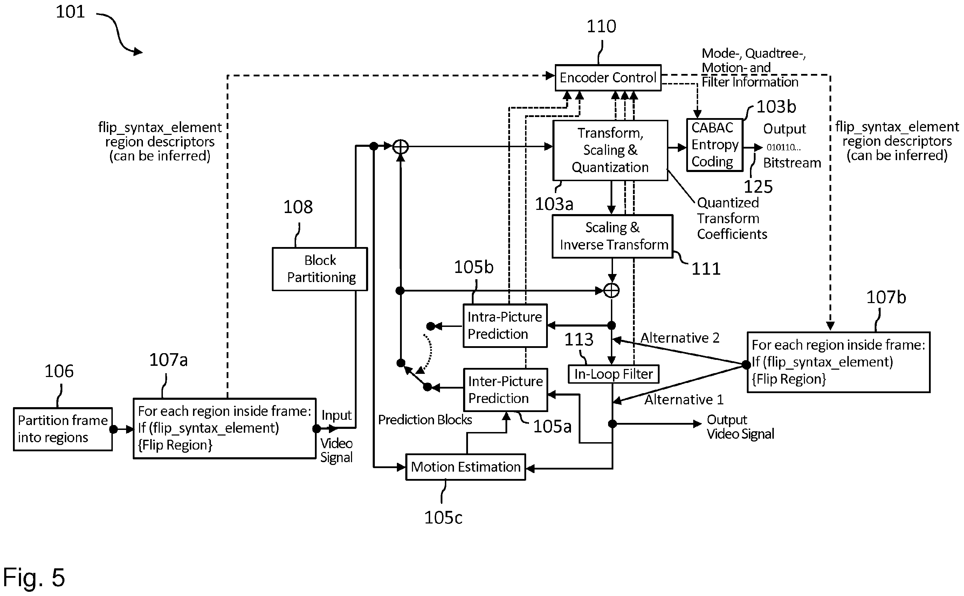

In an embodiment, the encoding apparatus 101 could be implemented as a hybrid encoder, as defined, for instance, in the HEVC standard, and could comprise further components not shown in figure 1. Such an embodiment will be described further below in the context of figure 5.

In an embodiment, the prediction unit 105 is configured to perform an intra prediction and/or an inter prediction for generating the predicted video coding block on the basis of the current video coding block and one or more neighboring video coding blocks which have the same flip state (flipped or non-flipped) and flip axis as the current video coding block. More specifically, any video coding blocks which do not have the same flip state as the current block, or not the same flip axis as the current block, may be discarded from intraprediction of the current block. This is based on the insight that the image after flipping will in most cases exhibit discontinuities at the border between the current block and any neighboring block that does not have the same flip state or not the same flip axis.

In an embodiment, the encoding unit 103 is further configured to encode decoding information in the encoded video data, to enable a decoding unit to know for every region of the plurality of regions whether or not the respective region has been flipped. For example, the decoding information may comprise one of the following:
- a flip state of a first region of the plurality of regions of the current frame;
- an identifier for identifying a flipped region of the plurality of regions of the current frame;
- an identifier for identifying a non-flipped region of the plurality of regions of the current frame. The decoding unit will thus be enabled to determine the flip states of all the regions of the plurality of regions, e.g., by an analysis of image content of the regions, e.g., by evaluating continuity at borders between regions.

In an embodiment, the encoding unit 103 is configured to encode the current video coding block on the basis of the predicted video coding block as a part of a bitstream 125, in particular a CABAC portion of the bitstream 125, and wherein the encoding unit 103 is configured to continue the bitstream 125, in particular the CABAC portion of the bitstream 125, between regions of the current frame having different flip states.

In an embodiment, the encoding unit 103 comprises a entropy coding unit 103b based on a context model and wherein the entropy coding unit 103b is configured to continue using the same context model for regions of the current frame having different flip states.

The decoding apparatus 151 is configured to decode encoded video data provided, for instance, in the form of the bitstream 125. The video data comprises one or more frames. Each frame is partitioned into a plurality of regions. Each region has a symmetry axis and comprises one or more video coding blocks.

The decoding 151 apparatus comprises: a decoding unit 153 configured to decode the encoded video data for providing a residual video coding block associated with a current video coding block of a current frame of the one or more frames; a prediction unit 155 configured to generate for the current, i.e. currently processed video coding block a predicted video coding block; a restoration unit 159 configured to restore the current video coding block on the basis of the residual video coding block and the predicted video coding block; and a flip unit 157 configured to flip, once all blocks of the current frame have been restored by the restoration unit 159, each region of a selected subset of the plurality of regions of the current frame about the flip axis of the respective region.

In an embodiment, the prediction unit 155 is configured to perform an intra prediction and/or an inter prediction for generating the predicted video coding block on the basis of the current video coding block.

In an embodiment, the decoding apparatus 151 could be implemented as a hybrid decoder, as defined, for instance, in the HEVC standard, and could comprise further components not shown in figure 1.

In an embodiment, the prediction unit 155 is configured perform an intra prediction and/or an inter prediction for generating the predicted video coding block on the basis of the current video coding block and one or more neighboring video coding blocks which have the same flip state and the same flip axis as the current video coding block. More specifically, any video coding blocks which do not have the same flip state as the current block, or not the same flip axis as the current block, may be discarded from intraprediction of the current block. This is based on the insight that the image after flipping will in most cases exhibit discontinuities at the border between the current block and any neighboring block that does not have the same flip state or not the same flip axis.

In an embodiment, the flip unit 157 is configured flip axisto determine the subset of the plurality of regions of the current frame based on the encoded video data, e.g., as described in the summary section, and then apply the above mentioned flips to the regions of the thus determined subset (and not to any other regions of the plurality of regions).

In an embodiment, the decoding apparatus 151 further comprises an In-loop filtering unit for filtering the current frame provided by the flip unit 157.

In an embodiment, the decoding unit 153 is configured to decode the encoded video data in the form of a bitstream 125, in particular a CABAC portion of the bitstream 125, and wherein the decoding unit 153 is configured to continue decoding the bitstream 125, in particular the CABAC portion of the bitstream 125, between regions of the current frame having different flip states.

In an embodiment, the decoding unit 153 comprises an entropy decoding unit based on a context model and wherein the entropy decoding unit is configured to continue using the same context model for regions of the current frame having different flip states.

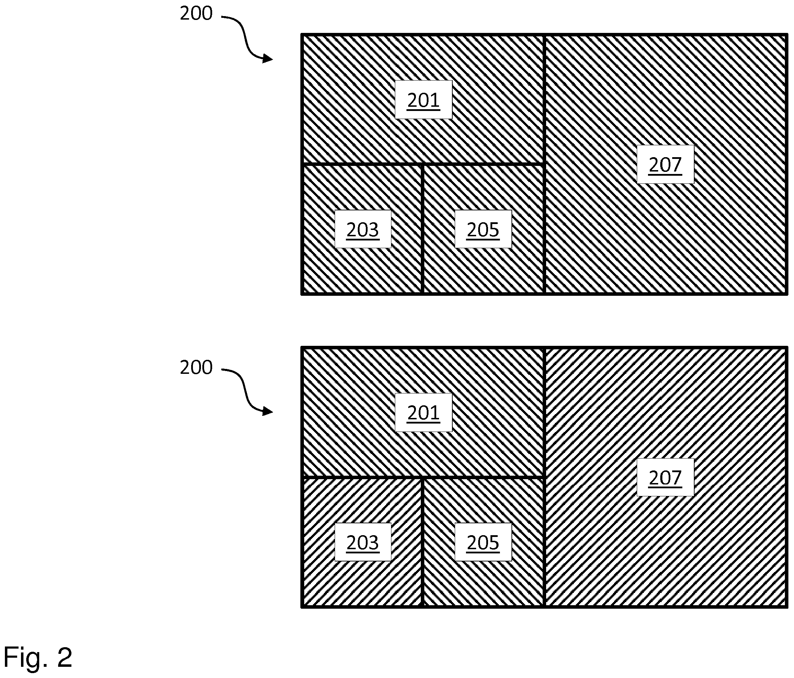

As will be appreciated, the flip unit 157 of the decoding apparatus 151 can be considered to perform the inverse operation of the operation performed by the flip unit 107 of the encoding apparatus 101. This is further illustrated in figure 2, which shows in the upper half an original video frame 200 comprising four regions 201, 203, 205 and 207 in their original non-flipped state and in the lower half a modified video frame 200, where, by way of example, the regions 203 and 207 have been flipped and the regions 201 and 205 are still in the original non-flipped state.

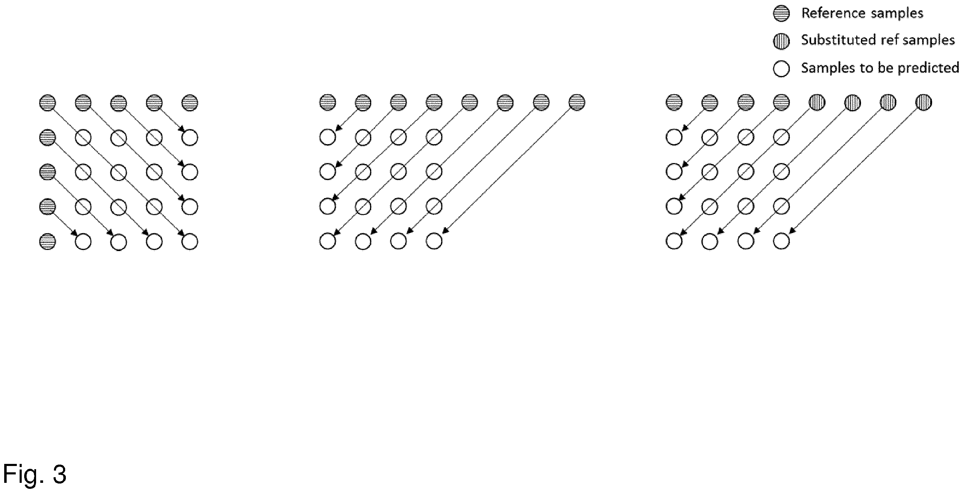

Figure 3 illustrates a problem, which can occur in conventional video coding devices using current intra prediction schemes and which can be addressed by the encoding apparatus 101 and the decoding apparatus 151 according to an embodiment. Figure 3 shows three cases, namely (a) on the left the application of the intra prediction mode 18 as defined in the HEVC standard, (b) in the middle the application of the intra prediction mode 34, where the top-right block is available at the instance of predicting the current block, and (c) on the right the application of the intra prediction mode 34, where the top-right block is not available at the instance of predicting the current block. As will be appreciated, for cases (b) and (c) shown in figure 3 the reference samples are far away from the samples to be predicted. Moreover, reference samples might be unavailable (hence substituted with a close neighboring sample) due to a predefined block processing order. Thus, conventional angular prediction modes that require samples from top-right and bottom-left neighboring blocks are generally not very efficient. Specifically in the HEVC standard, the intra angular prediction modes [2,9] and [27,34] are subject to coding performance degradation due to the predefined block processing order. The encoding apparatus 101 according to an embodiment allows addressing this problem by flipping for the cases (b) and (c) shown in figure 3 the region containing the current block, i.e. the samples to be predicted, around the y-axis using the flip unit 107 and then employing a more suitable angular prediction mode by the prediction unit 105 for predicting the samples of the current block.

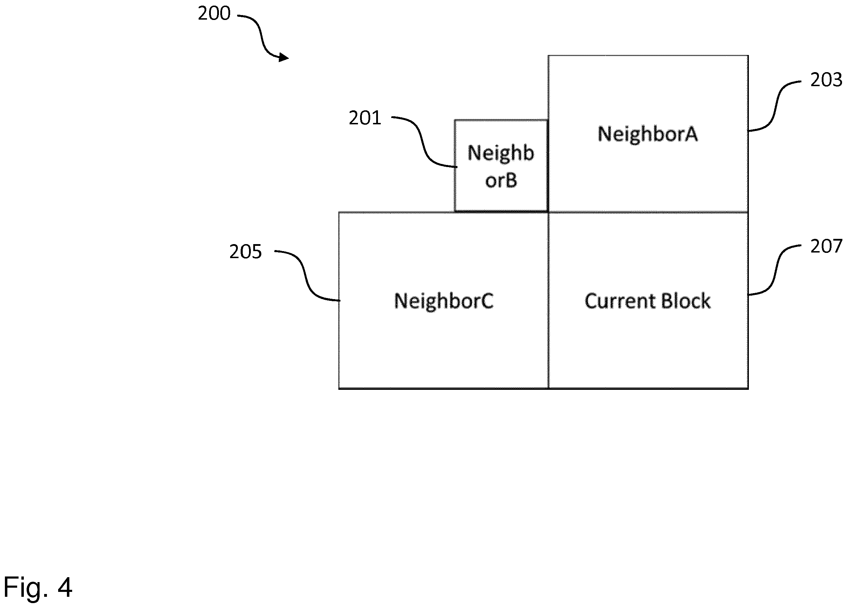

Figure 4 shows four exemplary regions or blocks of a further video data frame 200 as processed by the encoding apparatus 101 according to an embodiment and the decoding apparatus 151 according to an embodiment in order to illustrate different possible embodiments of the prediction units 105, 155. The current block 207 is the block that is currently being processed by the encoding apparatus 101 or the decoding apparatus 151. The neighboring blocks A to C 201, 203, 205 are exemplary blocks that belong to the current picture frame and that precede the current block in processing order. In order to encode/decode the current block 207, the prediction units 105, 155 can be configured to make, for instance, the following predictions on the basis of the neighboring blocks 201, 203, 205:
1. Pixel samples (such as by using intra prediction).
2. Intra prediction mode (e.g., if a neighboring block applies intra prediction in the vertical direction, it is also likely that the current block applies intra prediction in vertical direction).
3. Motion vector prediction (the horizontal and vertical length and directions of the motion vectors of current block can be predicted from a neighboring block).
4. Mode prediction (if a neighboring block is inter-predicted, it is likely that the current block is also inter predicted).

As already mentioned above, the encoding apparatus 101 and the decoding apparatus 151 could be implemented as a hybrid encoder and a hybrid decoder, as defined, for instance, in the HEVC standard. Figure 5 shows an embodiment of the encoding apparatus 101 as a hybrid encoder. As will be appreciated, a hybrid decoder embodiment essentially comprises the same or similar components as the hybrid encoder 101 shown in figure 5.

The embodiment of the encoding apparatus 101 shown in figure 5 operates in the following way. A current frame of a video signal is partitioned into a plurality of regions by the processing block 106. The flip unit 107 decides for each of these regions of the current frame, whether these regions should be flipped or remain in their original state, for instance, on the basis of a rate distortion criterion. Thus, the flip unit 107 provides a modified current frame comprising flipped regions and non-flipped regions. This modified current frame is partitioned into a plurality of non-overlapping video coding blocks. For each currently processed video coding block a predicted current video coding block is subtracted providing a residual video coding block. Then, the residual video coding block is transformed and quantized by the transformation and quantization unit 103a shown in figure 5 and entropy encoded by the entropy coding unit 103b. In another processing branch a reverse transformation and quantization unit 111 reverses the operation of the transformation and quantization unit 103a. An addition unit combines the residual video coding block with the predictor block to obtain a reconstructed video coding block, which is made available for the intra prediction unit 105b.

The reconstructed video coding block is possibly loop filtered by a loop filter unit 113 (choice can be made by a control unit 110 of the encoding apparatus 101) and stored in a reference frame buffer. At this stage the reconstructed video coding block is also available for inter prediction of video coding blocks of other frames using the inter prediction unit 105a, e.g., the data provided by the loop filter unit 113 is used by the inter prediction unit 115 for performing motion compensation. To this end, the encoding apparatus 101 shown in figure 5 further comprises a motion estimation unit 105c. In other embodiments, the motion estimation unit 105c can be implemented as a part of the inter prediction unit 105a. Generally, the control unit 110 of the encoding apparatus 101 selects the currently processed video coding block and the prediction mode, i.e. intra or inter prediction, for predicting the currently processed video coding block. This information is generally also needed by the decoding apparatus 151 and hence also entropy coded as decoding information into the bitstream 125 by the entropy coding unit 103c.

In a further embodiment, the encoding apparatus 101 shown in figure 5 is configured to perform one or more of the following steps:
(1) Split the input frame into one or more regions.
(2) Encode region information in the bitstream 125 (number of regions, sizes and coordinates).
(3) Encode flip direction syntax elements in the bitstream.
(4) Process the coding blocks in the frame according to a block processing order imposed by the partitioning into regions.
(5) If a current coding block is the first coding block in a region, and if the region is not the first region inside a frame or a tile: Initialize the CABAC context model tables using the context model tables from the last coding block of the previous region (simply put, do not refresh the context model tables at region boundaries).
(6) Before coding each block, check the upper and left neighboring coding blocks.
(7) If a neighboring coding block belongs to a region that has a different flip direction, do not use the neighboring block for spatial prediction of the current block (intra prediction operation, MPM mode decision etc).
(8) At the end of coding the last coding block of each region:
   a. Store CABAC context tables for initialization by the next region
   b. If the region is the last region in a frame or a tile (or if an other process in video codec requires that the Cabac bitstream has to be terminated), the bitstream 125 is terminated. Otherwise the bitstream 125 is not terminated.
   c. If the region has been flipped, it is flipped back.
   d. In-loop filtering operation is applied on the region boundaries.
   e. The region is output to the decoded picture buffer for later prediction by proceeding picture frames.

Similarly, an embodiment of the decoding apparatus 151 corresponding to the embodiment of the encoding apparatus 101 shown in figure 5 is configured to perform one or more of the following steps:
(1) Decode the region information from the bitstream 125 (number of regions, sizes and coordinates).
(2) Decode flip direction syntax elements from the bitstream 125.
(3) Process the coding blocks in the frame according to a block processing order imposed by, e.g., the region partitioning.
(4) If a current coding block is the first coding block in a region, and if the region is not the first region inside a frame or a tile: Initialize the CABAC context model tables using the context model tables from the last coding block of the previous region (simply put, do not refresh the context model tables at region boundaries).
(5) Before decoding each block, check the upper and left neighboring coding blocks.
(6) If a neighboring coding block belongs to a region that has a different flip direction, do not use the neighboring block for spatial prediction (intra prediction operation, MPM mode decision etc).
(7) At the end of coding the last coding block of each region:
   a. Store CABAC context tables for initialization by the next region.
   b. If the region is the last region in a frame, the bitstream 125 is terminated. Otherwise the bitstream 125 is not terminated.
   c. If the region is flipped, it is flipped back.
   d. In-loop filtering operation is applied on the region boundaries.
   e. The region is output to the decoded picture buffer for later prediction by proceeding picture frames.

The whole video bitstream might be composed of one or more sub-streams, such as CABAC sub-streams. The partitioning of the whole bitstream into multiple substreams provide error robustness, since if a decoding error occurs in a first sub-stream, it is possible to continue decoding at the beginning of the second sub-stream.

Bitstream termination is a process specific to CABAC (Context Adaptive Binary Arithmetic Codec) or other arithmetic coding techniques, which is applied at the end of sub-streams. The process of bitstream termination might contain processes such as writing a stop bit at the end of the bitstream, and applying byte alignment (padding the bitstream with ones or zeros until the number of bits in the bitstream is multiple of 8).

The partitioning of a bitstream into multiple sub-streams provides resilience to errors, however coding efficiency reduced due to processes like bitstream termination.

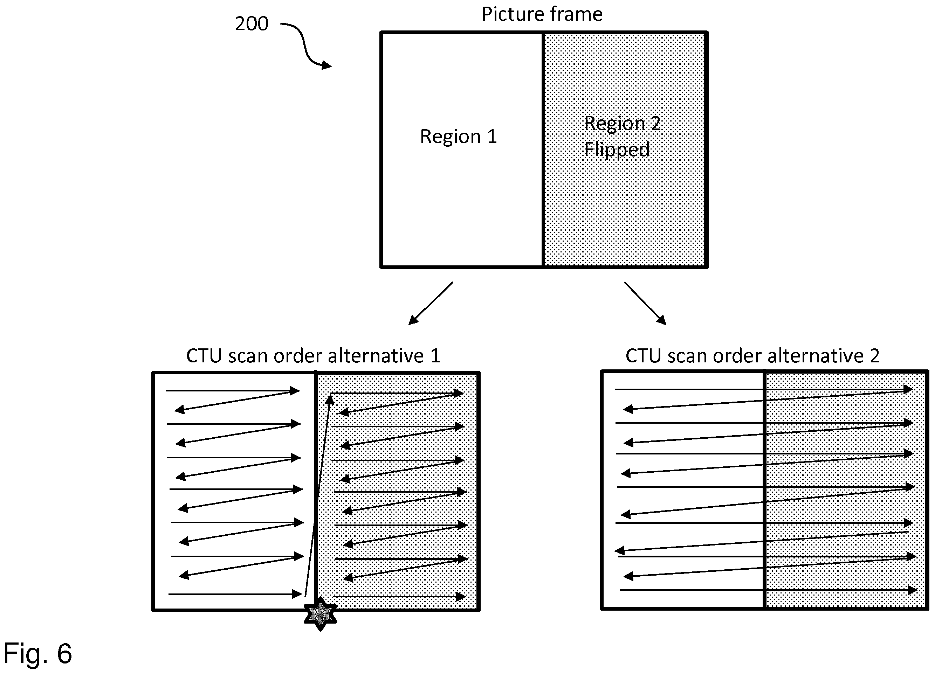

Figure 6 shows a schematic diagram illustrating two different block processing orders implemented in the encoding apparatus 101 according to an embodiment and the decoding apparatus 151 according to an embodiment. On the lower right hand side of figure 6 a conventional z-scan order is illustrated, which can be used by the encoding apparatus 101 and the decoding apparatus 151 according to an embodiment. A possibly more advantageous processing order is shown on the lower left hand side of figure 6. According to this embodiment, the encoding apparatus 101 and the decoding apparatus 151 are configured to process each region, i.e. all the blocks of a region in z-scan order, before proceeding to the next region. To this end, the encoding apparatus 101 and the decoding apparatus 151 can be configured to adapt a predefined processing order such that all video coding blocks of a region of the frame are decoded before proceeding to a further region of the frame. More details about block processing orders, which can be implemented in embodiments of the invention, can be found, for instance, in Vivienne Sze, Madhukar Budagavi, Gary J. Sullivan, "High Efficiency Video Coding (HEVC): Algorithms and Architectures," Springer, 2014, ISBN 978-3-319-06895-4, which is fully incorporated herein by reference.

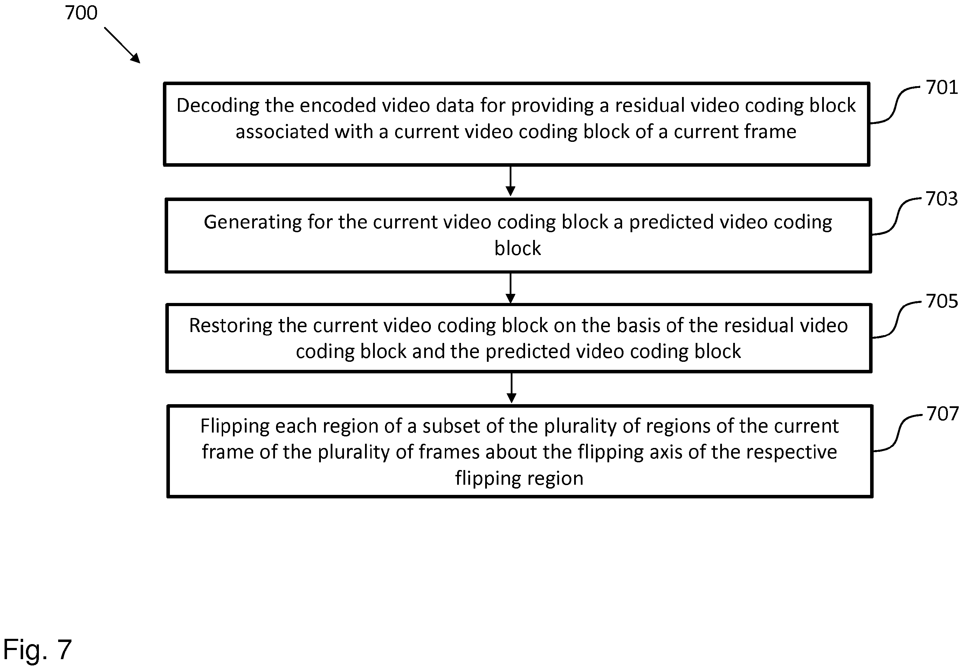

Figure 7 shows a schematic diagram illustrating a method 700 for decoding encoded video data according to an embodiment, wherein the video data comprises one or more frames, each frame is partitioned into a plurality of regions, and each region has a flip axis and comprises one or more video coding blocks.

The decoding method 700 comprises the following steps: decoding 701 the encoded video data for providing a residual video coding block associated with a current video coding block of a current frame; generating 703 for the current, i.e. currently processed video coding block a predicted video coding block; restoring 705 the current video coding block on the basis of the residual video coding block and the predicted video coding block; and flipping 707 each region of a selected subset of the plurality of regions of the current frame of the one or more frames about the flip axis of the respective region.

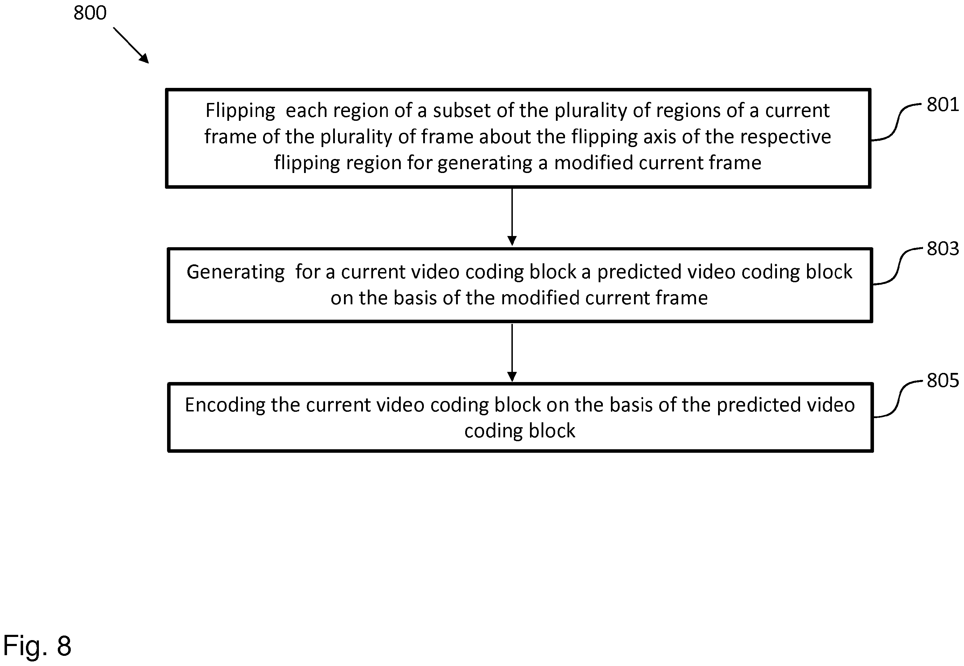

Figure 8 shows a schematic diagram illustrating a method 800 for encoding video data according to an embodiment. Te video data comprises one or more frames. Each frame is partitionable into a plurality of regions. Each of the regions has symmetry axis and comprises one or more video coding blocks. The method 800 comprises the steps of: flipping 801 each region of a selected subset of the plurality of regions of a current frame about the flip axis of the respective region for generating a modified current frame comprising non-flipped regions and flipped regions; generating 803 for a current, i.e. currently processed video coding block a predicted video coding block on the basis of the modified current frame; and encoding 805 the current video coding block on the basis of the predicted video coding block.

While a particular feature or aspect of the disclosure may have been disclosed with respect to only one of several implementations or embodiments, such a feature or aspect may be combined with one or more further features or aspects of the other implementations or embodiments as may be desired or advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives thereof may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the invention has been described with reference to one or more particular embodiments, those skilled in the art recognize that many changes may be made.

## Claims

1. An apparatus (151) for decoding encoded video data, the video data comprising one or more frames, each frame being partitioned into a plurality of regions, each region comprising one or more video coding blocks, wherein the apparatus (151) comprises:
a decoding unit (153) configured to decode the encoded video data for providing a residual video coding block associated with a current video coding block of a current frame;
a prediction unit (155) configured to generate for the current video coding block a predicted video coding block;
a restoration unit (159) configured to restore the current video coding block on the basis of the residual video coding block and the predicted video coding block; and
a flip unit (157) configured to flip each region of a subset of the plurality of regions of the current frame about a flip axis of the respective region, the flip axis being a symmetry axis with respect to the shape of the respective region,
wherein the flip unit (157) is further configured to determine the subset of the plurality of regions based on the encoded video data prior to flipping the regions of the subset by evaluating continuity of the image content at the borders between adjoining regions of the plurality of regions, wherein a discontinuity on the border exists between two regions, if only one of the regions has been flipped, or if the two regions do not have the same flip axis.

2. The apparatus (151) of claim 1, wherein the prediction unit (155) is configured to perform an intra prediction and/or an inter prediction for generating the predicted video coding block on the basis of the current video coding block.

3. The apparatus (151) of claim 2, wherein the prediction unit (155) is configured to perform an intra prediction and/or an inter prediction for generating the predicted video coding block on the basis of the current video coding block and one or more neighboring video coding blocks which have the same flip state and the same flip axis as the current video coding block.

4. The apparatus (151) of any one of the preceding claims, wherein each of the plurality of regions has a rectangular shape and wherein the flip unit (157) is configured to flip each region of the subset of the plurality of regions of the current frame of the one or more frames about the flip axis of the respective region for generating a modified current frame.

5. The apparatus (151) of any one of the preceding claims, wherein the apparatus (151) further comprises an In-loop filtering unit for filtering the current frame of the one or more frames provided by the flip unit (157).

6. The apparatus (151) of any one of the preceding claims, wherein the apparatus (151) is configured to process the plurality of video coding blocks in accordance with a processing order and wherein the apparatus (151) is configured to adapt the processing order such that all video coding blocks of a region of the frame are decoded before proceeding to a further region of the frame.

7. The apparatus (151) of any one of the preceding claims, wherein the decoding unit (153) is configured to decode the encoded video data in the form of a bitstream (125), in particular a CABAC portion of the bitstream (125), and wherein the decoding unit (153) is configured to continue decoding the bitstream (125), in particular the CABAC portion of the bitstream (125), between regions of the current frame having different flip states.

8. The apparatus (151) of any one of the preceding claims, wherein the decoding unit (153) comprises a entropy decoding unit based on a context model and wherein the entropy decoding unit is configured to continue using the same context model for regions of the current frame having different flip states.

9. A method (700) for decoding encoded video data, the video data comprising one or more frames, each frame being partitioned into a plurality of regions, each region comprising one or more video coding blocks, wherein the method (700) comprises:
decoding (701) the encoded video data for providing a residual video coding block associated with a current video coding block of a current frame;
generating (703) for the current video coding block a predicted video coding block;
restoring (705) the current video coding block on the basis of the residual video coding block and the predicted video coding block;
determining a subset of the plurality of regions based on the encoded video data by evaluating continuity of the image content at the borders between adjoining regions of the plurality of regions, wherein a discontinuity on the border between two regions exists, if only one of the regions has been flipped, or if the two regions do not have the same flip axis; and
flipping (707) each region of a subset of the plurality of regions of the current frame about a flip axis of the respective region, the flip axis being a symmetry axis with respect to the shape of that region.

10. A computer program comprising program code for performing the method (700) of claim 9 when executed on a computer or a processor.

## Patentansprüche

1. Einrichtung (151) zum Dekodieren von kodierten Videodaten, wobei die Videodaten einen oder mehrere Frames umfassen, wobei jeder Frame in eine Vielzahl von Bereichen unterteilt ist, wobei jeder Bereich einen oder mehrere Videokodierblöcke umfasst, wobei die Einrichtung (151) umfasst:
eine Dekodiereinheit (153), die konfiguriert ist, um die kodierten Videodaten zu dekodieren, um einen Rest-Videokodierblock bereitzustellen, der einem aktuellen Videokodierblock eines aktuellen Frames zugeordnet ist;
eine Vorhersageeinheit (155), die konfiguriert ist, um für den aktuellen Videokodierblock einen vorhergesagten Videokodierblock zu erzeugen;
eine Wiederherstellungseinheit (159), die konfiguriert ist, um den aktuellen Videokodierblock auf der Grundlage des Rest-Videokodierblocks und des vorhergesagten Videokodierblocks wiederherzustellen; und
eine Umkehreinheit (157), die konfiguriert ist, um jeden Bereich einer Teilmenge aus der Vielzahl von Bereichen des aktuellen Frames um eine Umkehrachse des jeweiligen Bereichs umzukehren, wobei die Umkehrachse eine Symmetrieachse in Bezug auf die Form des jeweiligen Bereichs ist,
wobei die Umkehreinheit (157) ferner konfiguriert ist, um die Teilmenge aus der Vielzahl von Bereichen basierend auf den kodierten Videodaten vor dem Umkehren der Bereiche der Teilmenge zu bestimmen, indem Kontinuität des Bildinhalts an den Grenzen zwischen angrenzenden Bereichen der Vielzahl von Bereichen ausgewertet wird, wobei eine Diskontinuität an der Grenze zwischen zwei Bereichen vorliegt, wenn nur einer der Bereiche umgekehrt worden ist oder wenn die zwei Bereiche nicht die gleiche Umkehrachse aufweisen.

2. Einrichtung (151) nach Anspruch 1, wobei die Vorhersageeinheit (155) konfiguriert ist, um eine Intra-Vorhersage und/oder eine Inter-Vorhersage zum Erzeugen des vorhergesagten Videokodierblocks auf der Grundlage des aktuellen Videokodierblocks durchzuführen.

3. Einrichtung (151) nach Anspruch 2, wobei die Vorhersageeinheit (155) konfiguriert ist, um eine Intra-Vorhersage und/oder eine Inter-Vorhersage zum Erzeugen des vorhergesagten Videokodierblocks auf der Grundlage des aktuellen Videokodierblocks und eines oder mehrerer benachbarten Videokodierblöcken, die den gleichen Umkehrzustand und die gleiche Umkehrachse wie der aktuelle Videokodierblock aufweisen, durchzuführen.

4. Einrichtung (151) nach einem der vorhergehenden Ansprüche, wobei jeder aus der Vielzahl von Bereichen eine rechteckige Form aufweist und wobei die Umkehreinheit (157) konfiguriert ist, um jeden Bereich der Teilmenge aus der Vielzahl von Bereichen des aktuellen Frame des einen oder der mehreren Frames um die Umkehrachse des jeweiligen Bereichs umzukehren, um einen modifizierten aktuellen Frame zu erzeugen.

5. Einrichtung (151) nach einem der vorhergehenden Ansprüche, wobei die Einrichtung (151) ferner eine In-Loop-Filtereinheit zum Filtern des aktuellen Frames des einen oder der mehreren Frames umfasst, die durch die Umkehreinheit (157) bereitgestellt werden.

6. Einrichtung (151) nach einem der vorhergehenden Ansprüche, wobei die Einrichtung (151) konfiguriert ist, um die Vielzahl von Videokodierblöcken gemäß einer Verarbeitungsreihenfolge zu verarbeiten und wobei die Einrichtung (151) konfiguriert ist, um die Verarbeitungsreihenfolge anzupassen, sodass alle Videokodierblöcke eines Bereichs des Frames dekodiert werden, bevor zu einem weiteren Bereich des Frames übergegangen wird.

7. Einrichtung (151) nach einem der vorhergehenden Ansprüche, wobei die Dekodiereinheit (153) konfiguriert ist, um die kodierten Videodaten in der Form eines Bitstroms (125), insbesondere eines CABAC-Abschnittes des Bitstroms (125), zu dekodieren, und wobei die Dekodiereinheit (153) konfiguriert ist, um Dekodieren des Bitstroms (125), insbesondere des CABAC-Abschnittes des Bitstroms (125), zwischen Bereichen des aktuellen Frames mit unterschiedlichen Umkehrzuständen fortzusetzen.

8. Einrichtung (151) nach einem der vorhergehenden Ansprüche, wobei die Dekodiereinheit (153) eine Entropie-Dekodiereinheit umfasst, die auf einem Kontextmodell basiert, und wobei die Entropie-Dekodiereinheit konfiguriert ist, um weiterhin dasselbe Kontextmodell für Bereiche des aktuellen Frames mit unterschiedlichen Umkehrzuständen zu verwenden.

9. Verfahren (700) zum Dekodieren von kodierten Videodaten, wobei die Videodaten einen oder mehrere Frames umfassen, wobei jeder Frame in eine Vielzahl von Bereichen unterteilt ist, wobei jeder Bereich einen oder mehrere Videokodierblöcke umfasst, wobei das Verfahren (700) umfasst:
Dekodieren (701) der kodierten Videodaten, um einen Rest-Videokodierblock bereitzustellen, der einem aktuellen Videokodierblock eines aktuellen Frames zugeordnet ist;
Erzeugen (703) eines vorhergesagten Videokodierblocks für den aktuellen Videokodierblock;
Wiederherstellen (705) des aktuellen Videokodierblocks auf der Grundlage des Rest-Videokodierblocks und des vorhergesagten Videokodierblocks;
Bestimmen einer Teilmenge aus der Vielzahl von Bereichen basierend auf den kodierten Videodaten, indem Kontinuität des Bildinhalts an den Grenzen zwischen angrenzenden Bereichen aus der Vielzahl von Bereichen ausgewertet wird, wobei eine Diskontinuität an der Grenze zwischen zwei Bereichen vorliegt, wenn nur einer der Bereiche umgekehrt worden ist oder wenn die zwei Bereiche nicht die gleiche Umkehrachse aufweisen; und
Umkehren (707) jedes Bereichs einer Teilmenge aus der Vielzahl von Bereichen des aktuellen Frames um eine Umkehrachse des jeweiligen Bereichs, wobei die Umkehrachse eine Symmetrieachse in Bezug auf die Form dieses Bereichs ist.

10. Computerprogramm, das Programmcode zum Durchführen des Verfahrens (700) nach Anspruch 9 umfasst, wenn es auf einem Computer oder einem Prozessor ausgeführt wird.

## Revendications

1. Appareil (151) de décodage de données vidéo codées, les données vidéo comprenant une ou plusieurs trames, chaque trame étant divisée en une pluralité de régions, chaque région comprenant un ou plusieurs blocs de codage vidéo, dans lequel l'appareil (151) comprend :
une unité de décodage (153) configurée pour décoder les données vidéo codées pour fournir un bloc de codage vidéo résiduel associé à un bloc de codage vidéo actuel d'une trame actuelle ; une unité de prédiction (155) configurée pour générer pour le bloc de codage vidéo actuel un bloc de codage vidéo prédit ;
une unité de restauration (159) configurée pour restaurer le bloc de codage vidéo actuel sur la base du bloc de codage vidéo résiduel et du bloc de codage vidéo prédit ; et
une unité de retournement (157) configurée pour retourner chaque région d'un sous-ensemble de la pluralité de régions de la trame actuelle autour d'un axe de retournement de la région respective, l'axe de retournement étant un axe de symétrie par rapport à la forme de la région respective,
dans lequel l'unité de retournement (157) est en outre configurée pour déterminer le sous-ensemble de la pluralité de régions sur la base des données vidéo codées avant de retourner les régions du sous-ensemble en évaluant la continuité du contenu d'image aux frontières entre des régions adjacentes de la pluralité de régions, dans lequel une discontinuité sur la frontière existe entre deux régions, si une seule des régions a été retournée, ou si les deux régions n'ont pas le même axe de retournement.

2. Appareil (151) selon la revendication 1, dans lequel l'unité de prédiction (155) est configurée pour exécuter une prédiction intra et/ou une prédiction inter pour générer le bloc de codage vidéo prédit sur la base du bloc de codage vidéo actuel.

3. Appareil (151) selon la revendication 2, dans lequel l'unité de prédiction (155) est configurée pour exécuter une prédiction intra et/ou une prédiction inter pour générer le bloc de codage vidéo prédit sur la base du bloc de codage vidéo actuel et d'un ou de plusieurs blocs de codage vidéo voisins qui ont le même état de retournement et le même axe de retournement que le bloc de codage vidéo actuel.

4. Appareil (151) selon l'une quelconque des revendications précédentes, dans lequel chacune de la pluralité de régions a une forme rectangulaire et dans lequel l'unité de retournement (157) est configurée pour retourner chaque région du sous-ensemble de la pluralité de régions de la trame actuelle des une ou plusieurs trames autour de l'axe de retournement de la région respective pour générer une trame actuelle modifiée.

5. Appareil (151) selon l'une quelconque des revendications précédentes, dans lequel l'appareil (151) comprend en outre une unité de filtrage en boucle pour filtrer la trame actuelle des une ou plusieurs trames fournies par l'unité de retournement (157).

6. Appareil (151) selon l'une quelconque des revendications précédentes, dans lequel l'appareil (151) est configuré pour traiter la pluralité de blocs de codage vidéo conformément à un ordre de traitement et dans lequel l'appareil (151) est configuré pour adapter l'ordre de traitement de sorte que tous les blocs de codage vidéo d'une région de la trame sont décodés avant de passer à une autre région de la trame.

7. Appareil (151) selon l'une quelconque des revendications précédentes, dans lequel l'unité de décodage (153) est configurée pour décoder les données vidéo codées sous la forme d'un flux binaire (125), en particulier une partie CABAC du flux binaire (125), et dans lequel l'unité de décodage (153) est configurée pour continuer à décoder le flux binaire (125), en particulier la partie CABAC du flux binaire (125), entre des régions de la trame actuelle ayant différents états de retournement.

8. Appareil (151) selon l'une quelconque des revendications précédentes, dans lequel l'unité de décodage (153) comprend une unité de décodage entropique sur la base d'un modèle de contexte et dans lequel l'unité de décodage entropique est configurée pour continuer à utiliser le même modèle de contexte pour des régions de la trame actuelle ayant différents états de retournement.

9. Procédé (700) de décodage de données vidéo codées, les données vidéo comprenant une ou plusieurs trames, chaque trame étant divisée en une pluralité de régions, chaque région comprenant un ou plusieurs blocs de codage vidéo, dans lequel le procédé (700) comprend :
le décodage (701) des données vidéo codées pour fournir un bloc de codage vidéo résiduel associé à un bloc de codage vidéo actuel d'une trame actuelle ;
la génération (703) pour le bloc de codage vidéo actuel d'un bloc de codage vidéo prédit ;
la restauration (705) du bloc de codage vidéo actuel sur la base du bloc de codage vidéo résiduel et du bloc de codage vidéo prédit ;
la détermination d'un sous-ensemble de la pluralité de régions sur la base des données vidéo codées en évaluant la continuité du contenu d'image aux frontières entre des régions adjacentes de la pluralité de régions, dans lequel une discontinuité sur la frontière entre deux régions existe, si une seule des régions a été retournée, ou si les deux régions n'ont pas le même axe de retournement ; et
le retournement (707) de chaque région d'un sous-ensemble de la pluralité de régions de la trame actuelle autour d'un axe de retournement de la région respective, l'axe de retournement étant un axe de symétrie par rapport à la forme de cette région.

10. Programme informatique comprenant un code de programme pour exécuter le procédé (700) selon la revendication 9 lorsqu'il est exécuté sur un ordinateur ou un processeur.
